# EUROPEAN PATENT SPECIFICATION

(11) **EP 4 376 141 B1**
(45) Date of publication and mention of the grant of the patent: **23.09.2026**
(21) Application number: 22922354.0
(22) Date of filing: 07.12.2022
(51) Int. Cl.: H01M 10/04, H01M 50/533, H01M 50/538, H01M 50/183, H01M 10/613, H01M 10/653, H01M 10/6553, H01M 10/6555

(54) **BATTERY MODULE AND BATTERY PACK INCLUDING SAME**
BATTERIEMODUL UND BATTERIEPACK DAMIT
MODULE DE BATTERIE ET BLOC-BATTERIE LE COMPRENANT

(30) Priority: 19.01.2022 KR 20220007953
(43) Date of publication of application: 29.05.2024
(73) Proprietor: LG Energy Solution, Ltd., Seoul 07335 (KR)
(72) Inventor: KIM, Min Seop, Daejeon 34122 (KR); SEONG, Junyeob, Daejeon 34122 (KR); JEON, Jongpil, Daejeon 34122 (KR)
(74) Representative: Plasseraud IP
(86) International application number: PCT/KR2022/019768
(87) International publication number: WO 2023/140497

(56) References cited:
- EP-A1- 3 553 843
- WO-A1-2021/215661
- DE-A1- 102015 110 667
- KR-A- 20160 045 468
- KR-A- 20160 045 468
- KR-A- 20190 078 521
- KR-A- 20200 003 600
- KR-A- 20210 060 243
- KR-B1- 101 415 575
- US-A1- 2020 343 499
- US-A1- 2021 028 517
- US-A1- 2021 367 295

## Description

### [TECHNICAL FIELD]

### Cross Citation with Related Application(s)

This application claims the benefit of Korean Patent Application No. 10-2022-0007953 filed on January 19, 2022 with the Korean Intellectual Property Office.

The present disclosure relates to a battery module and a battery pack including the same, and more particularly, to a battery module with improved cooling performance, and a battery pack including the same.

### [BACKGROUND]

With the technology development and increased demand for mobile devices, demand for secondary batteries as energy sources have been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while medium- or large-sized devices such as vehicles require high power and large capacity. Therefore, a medium- or large-sized battery module having a plurality of battery cells electrically connected to one another is used.

Since medium- or large-sized battery modules are preferably manufactured with as small a size and weight as possible, a prismatic battery, a pouch-type battery, or the like, which can be stacked with high integration and has a small weight relative to capacity, is mainly used as a battery cell of the medium- or large-sized battery modules. Such a battery module has a structure in which a plurality of cell assemblies including a plurality of unit battery cells are connected in series to obtain high output. Further, the battery cell includes positive and negative electrode current collectors, a separator, an active material, an electrolyte, and the like, and thus can be repeatedly charged and discharged through an electrochemical reaction between components.

Meanwhile, in recent years, amid the growing need for large-capacity structures including their utilization as an energy storage source, there is an increasing demand for battery packs having a multi-module structure formed by assembling a plurality of battery modules in which a plurality of secondary batteries are connected in series and/or in parallel.

Further, when a plurality of battery cells are connected in series or in parallel to configure a battery pack, it is common to configure a battery module composed of at least one battery cell first and then configure a battery pack by using at least one battery module and adding other components.

Generally, when a secondary battery is heated over a proper temperature, the performance of the secondary battery may deteriorate, and in the worst case, there is also a risk of an explosion or ignition. In particular, a plurality of secondary batteries, that is, a battery module or a battery pack having battery cells can accumulate the heat emitted from the plurality of battery cells in a narrow space, which may raise the temperature of the battery module quickly and severely. In other words, a battery module including a large number of battery cells, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, if a medium- or large-sized battery module is included in a battery pack for a vehicle, the battery module may be frequently exposed to direct sunlight and may be placed under high-temperature conditions, for example, in summer or in a desert.

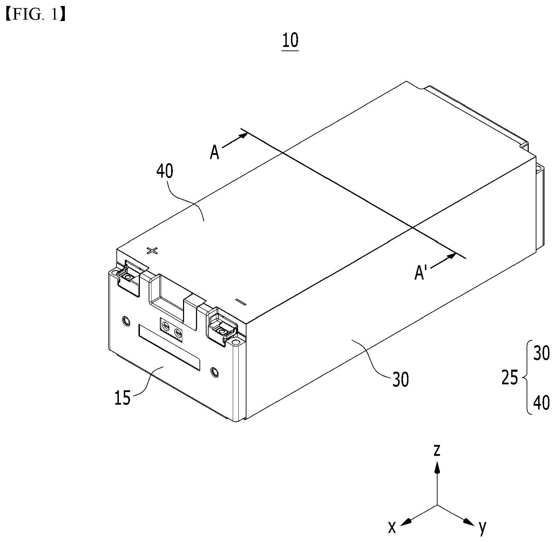

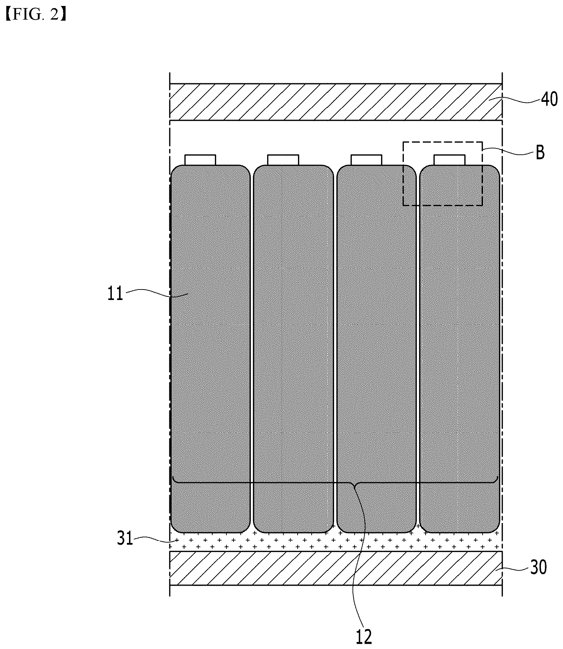

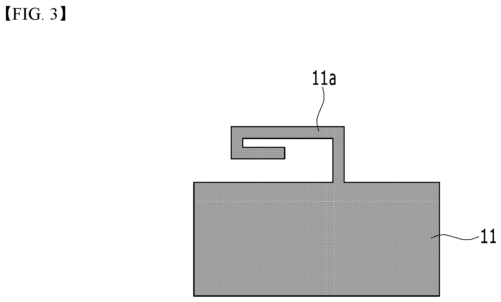

FIG. 1 is a perspective view of a conventional battery module. FIG. 2 is a cross-sectional view taken along the cutting line A-A' in FIG. 1. FIG. 3 is an enlarged view of a section B of FIG. 2.

Referring to FIGS. 1 to 3, a conventional battery module 10 includes a battery cell stack 12 in which a plurality of battery cells 11 are stacked in one direction, a module frame 25 that houses the battery cell stack 12, and end plates 15 that cover the front and rear surfaces of the battery cell stack 12. The module frame 25 includes a lower frame 30 that covers the lower part and both side surfaces of the battery cell stack 12, and an upper plate 40 that covers the upper surface of the battery cell stack 12. Additionally, a thermally conductive resin layer 31 located between the lower portion of the battery cell stack 12 and the bottom portion of the module frame 25 may be formed.

At this time, referring to FIG. 3, the battery cell 11 of the conventional battery module 10 is configured by folding the sealing portion 11a or maintaining it as it is. At this time, when the sealing portion 11a is disposed as shown in FIG. 3, it is difficult to utilize the space between the upper plate 40 and the battery cell stack 12 due to the sealing portion 11a. Therefore, due to the arrangement of the sealing portion 11a, not only it is difficult to achieve an effective cooling effect through the upper portion of the battery module 10, but also there is a problem that the cooling performance is deteriorated by an air layer formed adjacent to the sealing portion 11a, such as the space between the sealing portion 11a and the main body of the battery cell 10.

Therefore, there is a need for a new structure for solving the heat generation problem of the battery cell, which occurs according to the needs of high capacity, high energy, rapid charging, and the like.

Document US 2021/028517 A1 discusses a battery module that can suppress the propagation of flame or heat to the other battery cells when the flame occurs in the battery cells. Document US 2020/343499 A1 relates to a battery module including a heat-shrinkable tube, and more particularly, to a battery module having excellent cooling efficiency and allowing easy recycling of inner components at disposal by applying a heat-shrinkable tube serving as a module housing to the battery module. Document WO 2021/215661 relates to a battery cell for improving cooling performance and a manufacturing method thereof. Document US 2021/367295 discusses a battery cell and a battery module including such battery cells, the battery cells being easy to fix and resistant to misalignment with respect to each other, and the battery module receiving a uniform restraining load. Document EP 3 553 843 A1 discusses a secondary battery module and, more particularly, to a secondary battery module including an improved, more efficient cooling. Document DE 10 2015 110667 A1 relates to a cell arrangement, in particular for a battery, in particular for motor vehicles. Document KR 2016 0045468 A relates to a pouch type secondary battery capable of easily and simply making a pouch sealing process and reducing the risk of leakage such as electrolyte due to sealing.

### [DETAILED DESCRIPTION OF THE INVENTION]

### [Technical Problem]

It is an object of the present invention to provide a battery module with improved cooling performance, and a battery pack including the same.

However, the objects of the present disclosure are not limited to the aforementioned objects, and other objects which are not mentioned herein should be clearly understood by those skilled in the art from the following detailed description and the accompanying drawing.

### [Technical Solution]

According to the independent claim 1, there is provided a battery module comprising: a battery cell stack including a plurality of battery cells; and a module frame that houses the battery cell stack, wherein each battery cell comprises an electrode assembly; and a battery case which corresponds to a tubular case that is opened at its front and rear surfaces, the battery case housing the electrode assembly, and wherein a sealing portion is formed on each of the front and the rear surface of the battery case.

The battery cell is sealed by the two sealing portions.

The battery cell comprises a one side portion formed in both upper and lower portions of the battery case.

The battery module further comprises a thermally conductive resin layer located between a lower surface of the battery cell stack and a bottom portion of the module frame and between an upper portion of the battery cell stack and an upper portion of the module frame.

The lower surface of the battery cell stack and the upper portion of the battery cell stack that contact the respective thermally conductive resin layer have a flat shape. The flat shape corresponds to one side portion of the battery cell which is an integral portion of the tubular case.

Each one side portion of the battery cell is not formed with a sealing portion and is formed in a flat shape.

The battery cells further comprise electrode leads formed protrusively from the battery cells, and the sealing portion may be formed to be adjacent to the electrode lead.

The battery module according to another embodiment out of the scope of the present disclosure further comprises a sealing portion formed at one side portion of the battery cell, wherein the sealing portion formed on the one side may be formed to protrude from the battery case.

According to an embodiment out of the scope of the invention, the sealing portion formed at the one side portion may be formed to protrude from the unopened one surface of the battery case.

One side portion of the battery cell may be an upper one side portion of the battery case. According to an embodiment out of the scope of the invention, the sealing portion formed at the one side portion may be formed at an edge of the one side portion.

According to an embodiment out of the scope of the invention, the protrusively formed sealing portion may be bent and adhered from the edge of the one side portion toward the center of the one side portion.

According to an embodiment out of the scope of the invention, the sealing portion formed at the one side portion may be formed at the center of the one side portion.

According to an embodiment out of the scope of the invention, the protrusively formed sealing portion may be bent and adhered from the center of the one side portion toward the edge of the one side portion.

There is provided a battery pack comprising the above-mentioned battery module.

### [Advantageous Effects]

A battery module according to the invention includes a battery cell in which a sealing portion is minimized, thereby capable of effectively cooling a battery cell whose temperature rises in a high current and rapid charging environment. In addition, the internal temperature deviation of the battery module can be minimized, thereby improving the stability of the battery module.

The effects of the present disclosure are not limited to the effects mentioned above and additional other effects not described above will be clearly understood from the description of the appended claims by those skilled in the art.

### [BRIEF DESCRIPTION OF THE DRAWINGS]

FIG. 1 is a perspective view of a conventional battery module;
FIG. 2 is a cross-sectional view taken along the cutting line A-A' in FIG. 1;
FIG. 3 is an enlarged view of a section B of FIG. 2;
FIG. 4 is an exploded perspective view of a battery module according to one embodiment of the present invention;
FIG. 5 is a cross-sectional view of the battery module according to one embodiment of the present invention taken along the cutting line A-A' of FIG. 1;
FIG. 6 is an enlarged view of a section C of FIG. 5;
FIG. 7 is a perspective view showing a battery cell included in a battery module according to one embodiment of the present invention;
FIG. 8 is a perspective view showing a battery case included in the battery cell of FIG. 7;
FIG. 9 is a cross-sectional view taken along the cutting line D-D' of FIG. 7;.
FIG. 10 is a diagram showing a battery cell included in a battery module according to another embodiment of the present disclosure;
FIG. 11 is a diagram showing a battery cell that does not fall within the scope of the invention featuring a sealing part formed in the battery cell of FIG. 10 together; and
FIG. 12 does not fall within the scope of the invention and discloses a view showing together another type of sealing portion formed in the battery cell of FIG. 10.

### [DETAILED DESCRIPTION OF THE EMBODIMENTS]

Hereinafter, various embodiments of the present invention will be described in detail with reference to the accompanying drawings so that those skilled in the art can easily carry out them.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

The terms "first," "second," etc. are used to explain various components, but the components should not be limited by the terms. These terms are only used to distinguish one component from the other component.

Now, the battery module according to the present disclosure will be described.

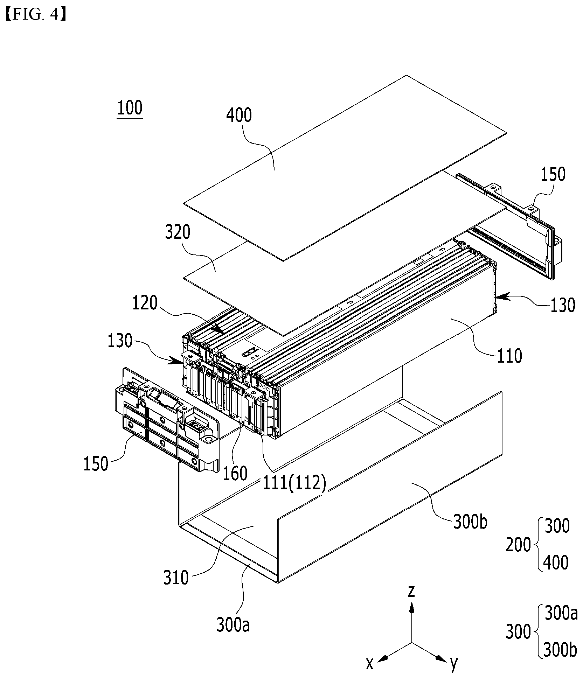

FIG. 4 is an exploded perspective view of a battery module according to one embodiment of the present invention.

Referring to FIG. 4, the battery module 100 according to the present embodiment includes a battery cell stack 120 in which a plurality of battery cells 110 are stacked, and a module frame 200 that houses the battery cell stack 120.

The module frame 200 includes a U-shaped frame 300 which is opened at its upper, front and rear surfaces and covers the lower portion and both side portions of the battery cell stack 120, and an upper plate 400 that covers the upper portion of the battery cell stack 120. At this time, the U-shaped frame 300 may include a bottom portion 300a supporting the lower portion of the battery cell stack 120, and side surface portions 300b each extending upward from both ends of the bottom portion 300a. However, the module frame 200 is not limited thereto, and can be replaced with a frame having another shape such as an L-shaped frame or a mono-frame surrounding the battery cell stack 120 except the front and rear surfaces. The battery cell stack 120 housed inside the module frame 200 can be physically protected through the module frame 200.

The upper plate 400 can cover the opened upper side surface of the module frame 200. The end plate 150 can cover the front and rear surfaces of the battery cell stack 120 that are opened in the module frame 200. The end plate 150 can be weld-coupled with the front and rear end edges of the upper plate 400 and the front and rear end edges of the module frame 200.

A busbar frame 130 can be formed between the end plate 150 and the front and rear surfaces of the battery cell stack 120. The busbar frame 130 can cover the portion of the battery cell stack 120 exposed from the module frame 200. Also, the plurality of busbars 160 mounted to the busbar frame 130 are formed protrusively from the battery cells 110, and can be connected with the electrode leads 111 and 112 mounted on the busbar frame 130. At this time, a slot through which the electrode leads 111 and 112 pass may be formed in the busbar 160. Therefore, the electrode leads 111 and 112 and the busbar 160 passing through the slot of the busbar 160 may contact with each other.

Further, the battery module 100 according to the claimed invention includes a first thermal conductive resin layer 310 located between the lower surface of the battery cell stack 120 and the bottom portion of the module frame 200, that is, the bottom portion 300a of the frame member 300, wherein the first thermal conductive resin layer 310 may play a role of transferring heat generated in the battery cell 110 to the bottom of the battery module 100 and fixing the battery cell stack 120.

Moreover, the battery module 100 according to the invention includes a second thermally conductive resin layer 320 formed between the upper portion of the battery cell stack 120 and the upper portion of the module frame 200, that is, the upper plate 400. Therefore, the heat generated in the battery cell 110 can be transferred even through the upper portion of the module frame 200 via the second thermally conductive resin layer 320.

In particular, the battery module 100 according to the present embodiment includes a heat transfer path to the upper portion of the module frame 200 through the second thermally conductive resin layer 320, rather than a one-way path through the bottom portion of the module frame 200, thereby capable of improving the cooling performance. At this time, the first thermally conductive resin layer 310 and the second thermally conductive resin layer 320 may be formed by a method of applying and curing a thermal resin. Therefore, the first thermally conductive resin layer 310 and the second thermally conductive resin layer 320 are illustrated in a plate shape, but in the process of applying and then curing the thermally conductive resin, it can be freely deformed in accordance with the shape of other components.

A conventional battery module was configured to release the heat generated in the battery cells through the thermal conductive resin layer formed at a lower portion of the battery cell. However, there was a problem that the heat generated in the battery cells cannot be efficiently cooled only by the thermally conductive resin layer formed under the battery cell stack and the cooling structure through the one-way path via the bottom portion of the module frame.

However, referring to FIGS. 1 to 3, the battery cell 10 of a conventional battery module had a problem that the sealing portion 11a is formed, and an air layer formed adjacent to the sealing portion 11a, such as a space between the sealing portion 11a and the body of the battery cell 10, reduces the cooling performance. Moreover, there was a problem that the space occupied by the sealing portion 11a is formed relatively wide and the space efficiency is lowered.

Therefore, there is a need for a structure that can effectively cool the heat in a situation where the battery cells generate a large amount of heat in a short period of time due to the flow of a high current, such as rapid charging.

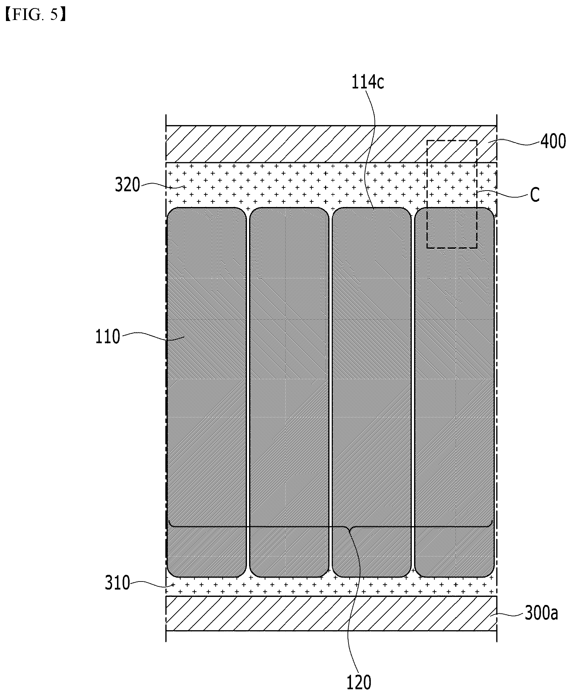

Next, the battery cell 110 included in the battery module 100 according to the present invention will be described in more detail with reference to FIGS. 5 to 9.

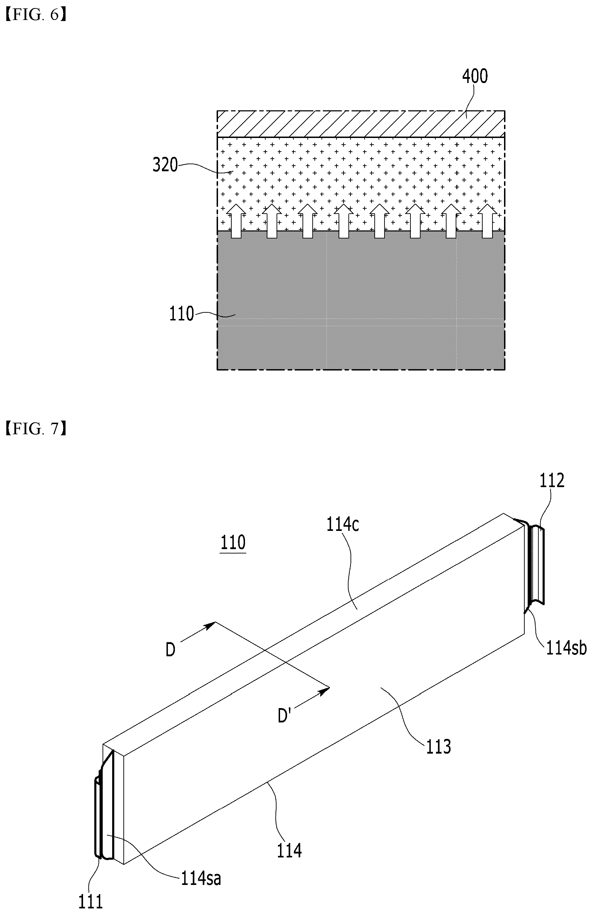

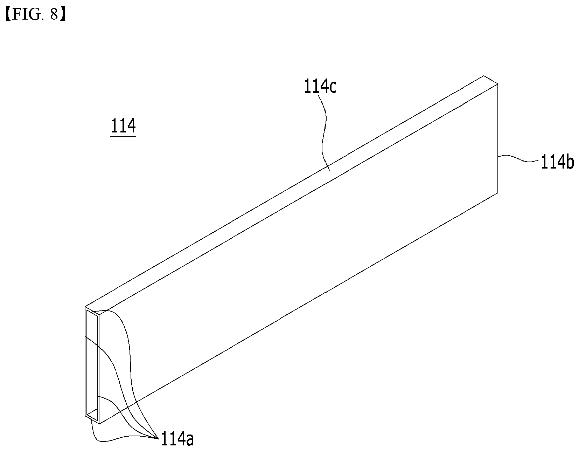

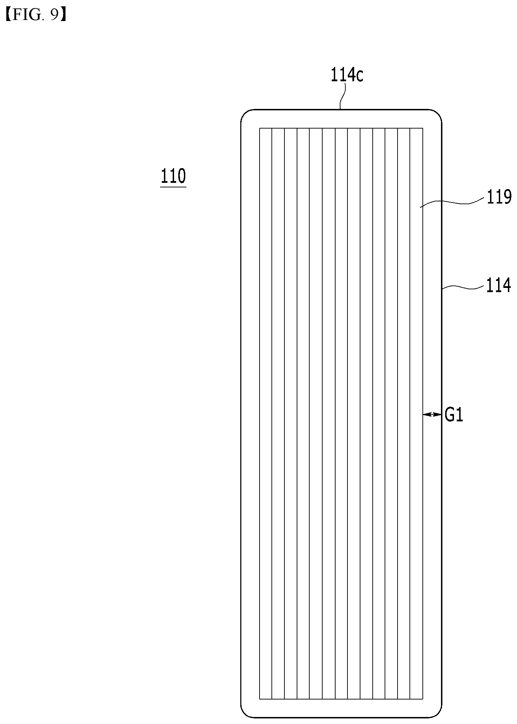

FIG. 5 is a cross-sectional view of the battery module according to one embodiment of the present disclosure taken along the cutting line A-A' of FIG. 2. FIG. 6 is an enlarged view of a section C of FIG. 5. FIG. 7 is a perspective view showing a battery cell included in a battery module according to one embodiment of the present disclosure. FIG. 8 is a perspective view showing a battery case included in the battery cell of FIG. 7. FIG. 9 is a cross-sectional view taken along the cutting line D-D' of FIG. 7.

Referring to FIGS. 4 to 9, the battery cell 110 included in the battery module 100 according to the present embodiment includes an electrode assembly 119; and a battery case 114 that is opened at its front and rear sides and houses the electrode assembly 119, wherein sealing portions 114sa and 114sb are formed on each of the front and rear surfaces of the battery case 114. At this time, the electrode assembly 119 may include a positive electrode, a negative electrode, and a separator disposed between the positive electrode and the negative electrode.

The battery cell 110 is preferably a pouch-type battery cell, and can be formed in a rectangular sheet-like structure. For example, referring to Fig. 7, the battery cell 110 according to the present embodiment has a structure in which two electrode leads 111 and 112 face each other and protrude from one end 114a and the other end 114b of the cell main body 113, respectively. That is, the battery cell 110 includes electrode leads 111 and 112 that are protruded in mutually opposite directions. More specifically, the electrode leads 111 and 112 are connected to an electrode assembly 119, and are protruded from the electrode assembly 119 to the outside of the battery cell 110.

Further, the battery cell 110 may include a battery case 114, wherein the battery case 114 is opened at its front and rear surfaces. Referring to FIG. 8, the battery case 114 is a tubular case that is opened at its front and rear surfaces. Therefore, the electrode assembly 119 is housed inside the battery case 114 through the front or rear surface of the battery case 114. Further, the battery case 114 may be made of a laminate sheet including a resin layer and a metal layer.

At this time, the battery case 114 includes both ends 114a and 114b and one side portion 114c connecting both ends 114a and 114b. The one side portion 114c is formed in both the upper and lower portions of the battery case 114 of FIG. 8. In addition, both ends 114a and 114b of the battery case 114 are formed in an opened shape, thus forming opened front and rear surfaces of the tubular case.

The battery cell 110 can be produced by joining both ends 114a and 114b of a cell case 114 in a state in which an electrode assembly 119 is housed in a cell case 114.

In other words, the battery cell 110 according to the present embodiment has a total of two sealing portions by adhering both ends 114a and 114b of the battery case 114, and the sealing portions 114sa and 114sb have a structure that is sealed by a method such as heat sealing. Therefore, the battery cell 110 is sealed by two sealing portions 114sa and 114sb.

Further, the front sealing portion 114sa and the rear sealing portion 114sb may be respectively formed so as to be adjacent to the electrode leads 111 and 112. After the electrode leads 111 and 112 are formed to protrude from the battery cell 110, the sealing portions 114sa and 114sb are formed to complete the sealing structure of the battery cell 110.

Such a battery cell 110 may be formed by a plurality of numbers, and the plurality of battery cells 110 may be stacked so as to be electrically connected to each other, thereby forming a battery cell stack 120. Particularly, as shown in FIG. 4, a plurality of battery cells 110 may be stacked along the direction parallel to the y-axis. Accordingly, the electrode leads 111 and 112 may protrude in the x-axis direction and the -x-axis direction, respectively.

Meanwhile, when the battery cells 110 are repeatedly charged and discharged, since a lot of heat may be generated, a novel structure for cooling the battery cell 110 may be required.

At this time, the conventional battery module had a problem that the cooling efficiency is reduced due to the space occupied by the sealing portion of the battery cell, and it is difficult to utilize the space when applying the thermally conductive resin layer to the upper portion.

Therefore, referring to FIGS. 5 and 6, the battery cell 110 according to the invention comprises a second thermally conductive resin layer 320 located between the upper portion of the module frame 200 and the battery cell stack 120, and an upper portion of the battery cell stack 120 that contacts the second thermally conductive resin layer 320 has a flat shape.

More specifically, referring to FIG. 6, the upper portion of the battery cell stack 120 has a flat shape, wherein the flat shape corresponds to one side portion 114c of the battery cell 110. That is, one side portion 114c of the battery cell 110 is an integral portion of the tubular case, and is not formed with a sealing portion, and thus may be formed in a flat shape. The invention as defined by claim 1 thus defines that the one side portion 114c is formed in a flat shape.

As described above, the battery cell 110 of the battery module 100 according to the present embodiment is configured such that the sealing portions 114sa and 114sb are formed only on the front and rear surfaces of the battery case 114, except the one side portion 114c, thereby capable of minimizing a space occupied by the sealing portion. In particular, since the space occupied by the sealing portion is minimized, the heat transfer resistance can be minimized and the cooling performance of the battery module can be improved.

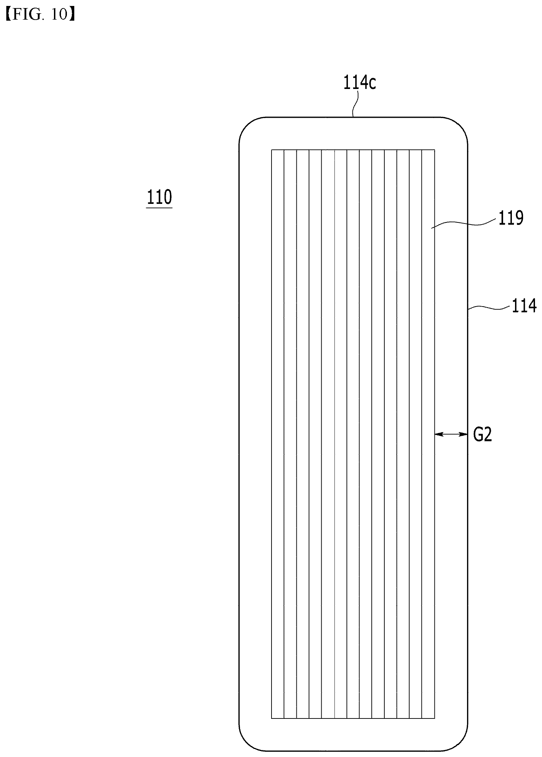

Next, a battery cell included in a battery module according to another embodiment of the present disclosure will be described with reference to FIGS. 10 to 12. Since the details of the battery module and battery cell overlap with the contents described above, only the contents different therefrom will be described.

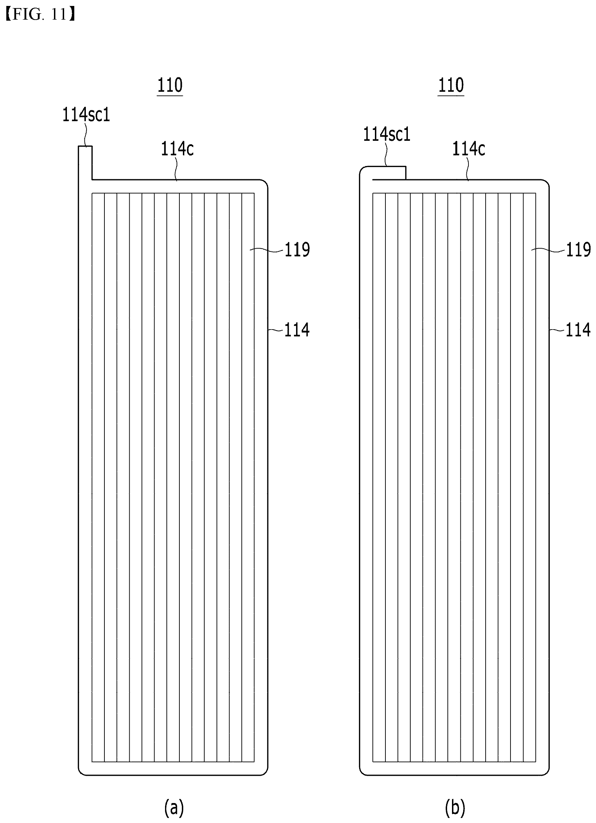

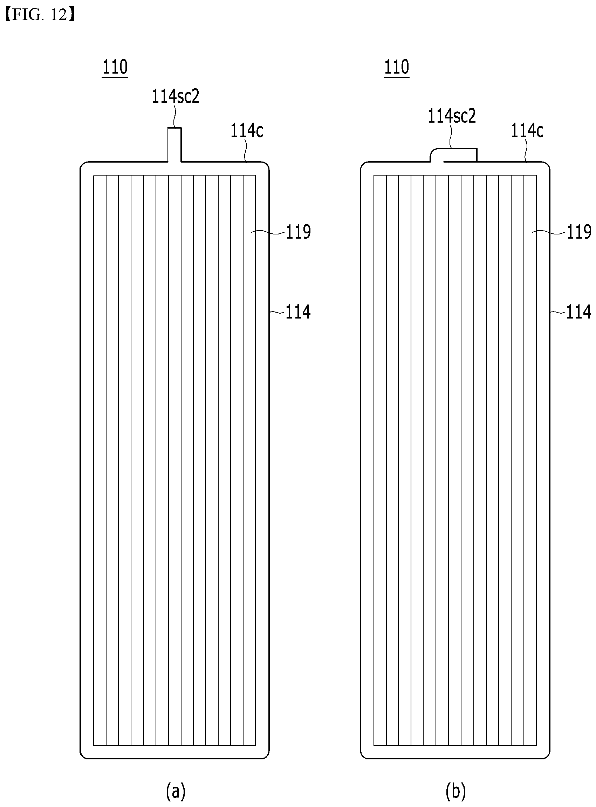

FIG. 10 is a diagram showing a battery cell included in a battery module according to another embodiment of the present disclosure. FIG. 11 is a diagram showing the battery cell of FIG. 10 and a sealing part formed in the battery cell of FIG. 10 together. FIG. 12 is a view showing together another type of sealing portion formed in the battery cell of FIG. 10.

Referring to FIGS. 9 and 10, the battery cell 110 may be configured to form spaces G1 and G2 between the battery case 114 and the electrode assembly 119. At this time, referring to FIGS. 9 and 10 together, even in the battery cell 110 described above, a space G1 can be formed between the battery case 114 and the electrode assembly 119, but in the battery cell 110 according to the present embodiment, the space G2 between the battery case 114 and the electrode assembly 119 may be widened by a margin size in consideration of the insertion of the electrode assembly 119. Therefore, in the battery cell 110 according to the present embodiment, a space G2 is formed between the battery case 114 and the electrode assembly 119 including the margin size in consideration of the insertion of the electrode assembly 119, whereby the efficiency can be increased, and the electrode assembly 119 can be easily inserted into the battery case 114.

At this time, after the electrode assembly 119 is inserted, the space G2 between the battery case 114 and the electrode assembly 119 is minimized to prevent the electrode assembly 119 from moving inside the battery cell 110 and, at the same time, sealing portions 114sc1 and 114sc2 can be formed at one side portion 114c of the battery case 114 in order to maximize the cooling surface.

At this time, the sealing portions 114sc1 and 114sc2 may be formed by compressing one side portion 114c of the battery case 114, and it may be formed by a heat-sealing method, similar to the front sealing portion 114sa and the rear sealing portion 114sb.

In addition, the sealing portions 114sc1 and 114sc2 formed at one side portion 114c may be formed by protruding a part of the tubular case. That is, it may be a structure in which portions corresponding to the already closed areas are further protruded and crimped so as to protrude from the unopened one surface of the battery case, instead of adhering and sealing portions corresponding to the opened areas, similar to the front sealing portion 114sa and the rear sealing portion 114sb. Therefore, a part of the already closed battery case 114 is formed as the sealing portions 114sc1 and 114sc2, so that the sealing portions 114sc1 and 114sc2 formed at one side portion 114c can be used as a gas storage space of the battery cell 110.

Referring to FIG. 11, the sealing portion 114sc1 formed at one side portion 114c may be formed at an edge of the one side portion 114c. At this time, the sealing portion 114sc1 formed at the edge of the one side portion 114c may be formed protrusively from the one side portion 114c. The protruding sealing portion 114sc1 may be formed so as to be bent and adhered from the edge of the one side portion 114c toward the center of the one side portion 114c. Therefore, even if the space G2 between the battery case 114 and the electrode assembly 119 is formed to include the margin size, not only can the electrode assembly 119 be fixed after the electrode assembly 119 is inserted, but also the cooling performance can be maintained and improved by minimizing the space occupied by the formation of the sealing portion 114sc1.

Further, referring to FIG. 12, the sealing portion 114sc2 formed at one side portion 114c may be formed at the center of the one side portion 114c. At this time, the sealing portion 114sc2 formed at the center of the one side portion 114c may be formed to protrude from the one side portion 114c. The protruding sealing portion 114sc2 may be formed so as to be bent and adhered from the center of the one side portion 114c toward the edge of the one side portion 114c. Therefore, the space occupied by the formation of the sealing portion 114sc1 can be minimized, thereby maintaining and improving the cooling performance.

In this manner, in the battery cell 110 included in the battery module 100 of the present disclosure, the battery case 114 is formed into a tubular case. Thus, even if sealing portions are formed only on the front and rear surfaces, and the sealing portion is formed at one side portion 114c, the space occupied by the sealing portion can be minimized, thereby maximizing the cooling effect of the battery cell.

Next, a battery pack according to yet another embodiment of the present disclosure will be described.

A battery pack according to the present embodiment comprises the above-mentioned battery module. In addition, the battery pack of the present disclosure may have a structure in which one or more of the battery modules according to the present embodiment are gathered, and packed together with a battery management system (BMS) and a cooling device that control and manage battery's temperature, voltage, etc.

The battery pack can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

### [Description of Reference Numerals]

100: battery module
110: battery cell
114sa, 114sb: front and rear sealing portions
114sc1, 114sc2: sealing portion formed at one side portion
120: battery cell stack
130: busbar frame
150: end plate
160: busbar
200: module frame
300: U-shaped frame
400: upper plate

## Claims

1. A battery module (100) comprising:
a battery cell stack (120) including a plurality of battery cells (110); and
a module frame (200) that houses the battery cell stack (120),
wherein each battery cell (110) comprises,
an electrode assembly (119); and
a battery case (114) which corresponds to a tubular case that is opened at its front and rear surfaces, the battery case housing the electrode assembly (119),
wherein a sealing portion (114sa, 114sb) is formed on each of the front and the rear surfaces of the battery case (114);
wherein the battery cell (110) is sealed by the two sealing portions (114sa, 114sb), and
wherein a one side portion (114c) is formed in both an upper and a lower portions of the battery cell case (114),
the battery module (100) further comprising a thermally conductive resin layer (310, 320) located between a lower surface of the battery cell stack (120) and a bottom portion of the module frame (200) and between an upper portion of the battery cell stack (120) and an upper portion of the module frame (200),
wherein the lower surface of the battery cells stack (120) and the upper portion of the battery cell stack (120) that contact the respective thermally conductive resin layer (310, 320) have a flat shape, and the flat shape corresponds to each one side portion (114c) of the battery cell which is an integral portion of the tubular case (114), and
wherein each one side portion (114c) of the battery cell is not formed with a sealing portion and is formed in a flat shape.

2. The battery module (100) according to any one of the preceding claims, wherein:
the battery cells (110) further comprise electrode leads (111, 112) formed protrusively from the battery cells (110), and
the sealing portion (114sa, 114sb) is formed to be adjacent to the electrode lead (111, 112).

3. The battery module according to any one of claims 1 to 2, wherein:
each battery cell comprises a total of two sealing portions which correspond to the two sealing portions formed on the front and the rear surfaces of the battery case (114).

4. A battery pack comprising the battery module (100) as set forth in any one of the preceding claims.

## Patentansprüche

1. Batteriemodul (100), umfassend:
einen Batteriezellenstapel (120), der eine Vielzahl von Batteriezellen (110) enthält; und
einen Modulrahmen (200), der den Batteriezellenstapel (120) aufnimmt,
wobei jede Batteriezelle (110) umfasst:
eine Elektrodenanordnung (119); und
ein Batteriegehäuse (114), das einem rohrförmigen Gehäuse entspricht, das an seiner vorderen und seiner hinteren Fläche offen steht, wobei das Batteriegehäuse die Elektrodenanordnung (119) aufnimmt,
wobei ein Dichtungsabschnitt (114sa, 114sb) jeweils an der vorderen und der hinteren Fläche des Batteriegehäuses (114) ausgebildet ist;
wobei die Batteriezelle (110) durch die beiden Dichtungsabschnitte (114sa, 114sb) abgedichtet ist, und
wobei ein Seitenabschnitt (114c) sowohl in einem oberen als auch in einem unteren Abschnitt des Batteriezellengehäuses (114) ausgebildet ist,
wobei das Batteriemodul (100) ferner eine wärmeleitende Harzschicht (310, 320) umfasst, die sich zwischen einer unteren Fläche des Batteriezellenstapels (120) und einem unteren Abschnitt des Modulrahmens (200) und zwischen einem oberen Abschnitt des Batteriezellenstapels (120) und einem oberen Abschnitt des Modulrahmens (200) befindet,
wobei die untere Fläche des Batteriezellenstapels (120) und der obere Abschnitt des Batteriezellenstapels (120), die die jeweilige wärmeleitende Harzschicht (310, 320) berühren, eine flache Form aufweisen, und die flache Form jedem Seitenabschnitt (114c) der Batteriezelle entspricht, der ein integraler Bestandteil des rohrförmigen Gehäuses (114) ist, und
wobei jeweils der Seitenabschnitt (114c) der Batteriezelle keinen Dichtungsabschnitt aufweist und in einer flachen Form ausgebildet ist.

2. Batteriemodul (100) nach dem vorhergehenden Anspruch, wobei
die Batteriezellen (110) ferner Elektrodenleitungen (111, 112) umfassen, die von den Batteriezellen (110) vorspringend ausgebildet sind, und
der Dichtungsabschnitt (114sa, 114sb) so ausgebildet ist, dass er an die Elektrodenleitung (111, 112) angrenzt.

3. Batteriemodul nach einem der Ansprüche 1 bis 2, wobei
jede Batteriezelle insgesamt zwei Dichtungsabschnitte umfasst, die den beiden Dichtungsabschnitten entsprechen, die auf der vorderen und der hinteren Fläche des Batteriegehäuses (114) ausgebildet sind.

4. Batteriepack, umfassend das Batteriemodul (100) nach einem der vorhergehenden Ansprüche.

## Revendications

1. Module de batterie (100) comprenant :
un empilement d'éléments de batterie (120) incluant une pluralité d'éléments de batterie (110) ; et
un cadre de module (200) qui loge l'empilement d'éléments de batterie (120),
dans lequel chaque élément de batterie (110) comprend,
un assemblage d'électrodes (119) ; et
un boîtier de batterie (114) qui correspond à un boîtier tubulaire qui est ouvert au niveau de ses surfaces avant et arrière, le boîtier de batterie logeant l'assemblage d'électrodes (119),
dans lequel une partie d'étanchéité (114sa, 114sb) est formée sur chacune des surfaces avant et arrière du boîtier de batterie (114) ;
dans lequel l'élément de batterie (110) est scellé par les deux parties d'étanchéité (114sa, 114sb), et
dans lequel une partie latérale (114c) est formée à la fois dans des parties supérieure et inférieure du boîtier d'élément de batterie (114),
le module de batterie (100) comprenant en outre une couche de résine thermoconductrice (310, 320) située entre une surface inférieure de l'empilement d'éléments de batterie (120) et une partie inférieure du cadre de module (200) et entre une partie supérieure de l'empilement d'éléments de batterie (120) et une partie supérieure du cadre de module (200),
dans lequel la surface inférieure de l'empilement d'éléments de batterie (120) et la partie supérieure de l'empilement d'éléments de batterie (120) qui sont en contact avec la couche de résine thermoconductrice (310, 320) respective ont une forme plate, et la forme plate correspond à chaque partie latérale (114c) de l'élément de batterie qui est une partie intégrante du boîtier tubulaire (114), et
dans lequel chaque partie latérale (114c) de l'élément de batterie n'est pas formée avec une partie d'étanchéité et est formée selon une forme plate.

2. Le module de batterie (100) selon l'une quelconque des revendications précédentes, dans lequel:
les éléments de batterie (110) comprennent en outre des conducteurs d'électrode (111, 112) formés en saillie à partir des éléments de batterie (110), et
la partie d'étanchéité (114sa, 114sb) est formée de manière à être adjacente au conducteur d'électrode (111, 112).

3. Le module de batterie selon l'une des revendications 1 à 2, dans lequel:
chaque élément de batterie comprend un total de deux parties d'étanchéité qui correspondent aux deux parties d'étanchéité formées sur les surfaces avant et arrière du boîtier de batterie (114).

4. Bloc-batterie comprenant le module de batterie (100) tel que défini dans l'une quelconque des revendications précédentes.
